# FASCICULE DE BREVET EUROPEEN

(11) **EP 0 622 040 B1**
(45) Date de publication et mention de la délivrance du brevet: **27.05.1998**
(21) Numéro de dépôt: 94420137.5
(22) Date de dépôt: 02.05.1994
(51) Int. Cl.: A47J 31/06

(54) **Machine à café électrique**
Elektrische Kaffeemaschine
Electric coffee percolator

(30) Priorité: 30.04.1993 FR 9305411
(43) Date de publication de la demande: 02.11.1994
(73) Titulaire: SEB S.A., 69130 Ecully (FR)
(72) Inventeur: Albendin, Georges, F-65100 Lourdes (FR); Charles, Patrick, F-65290 Louey (FR); Jurado, Manuel, F-64140 Lons (FR)

(56) Documents cités:
- EP-A- 0 019 291
- EP-A- 0 111 969
- CH-A- 616 064
- DE-A- 3 603 718
- DE-U- 7 203 807
- DE-U- 7 436 286
- DE-U- 8 027 643
- DE-U- 8 135 217
- DE-U- 9 115 639

## Description

La présente invention se rapporte au domaine technique général des machines à boisson chaude, du type machine à café-filtre, permettant à l'utilisateur de récupérer la boisson chaude soit dans une verseuse, soit directement dans au moins une et de préférence deux tasses préalablement disposées sur la machine par l'utilisateur.

La présente invention concerne une machine à café de type mixte comportant un boîtier avec un porte filtre pourvu d'au moins une sortie de liquide, un moyen anti-goutte associé à un moyen de rappel et à un clapet de fermeture pour fermer en position de rappel ladite sortie de liquide, ledit moyen anti-goutte comprenant un premier moyen de commande susceptible d'être actionné automatiquement à l'encontre du moyen de rappel par la verseuse lorsque cette dernière est mise en place sur la machine en vue de dégager ladite sortie.

Il a déjà été proposé, notamment dans le modèle d'utilité allemand DE-U-9115639, de réaliser une machine à café-filtre permettant à l'utilisateur de choisir le type de récipient dans lequel il souhaite récupérer le café chaud. Dans ce dispositif de l'art antérieur, la machine à café comporte de manière classique un support chauffant pour une verseuse, ainsi qu'un porte-filtre pourvu d'un moyen anti-goutte susceptible d'être actionné par la verseuse lorsque cette dernière est mise en place sur le support. Dans cette position la verseuse déplace le moyen anti-goutte et permet l'écoulement du café par un orifice d'évacuation ménagé dans le porte-filtre. La machine à café comporte en outre un porte-filtre sur lequel est monté de manière mobile un répartiteur d'écoulement destiné à être amené par rotation en position de travail par l'utilisateur lui-même lorsqu'il souhaite récupérer le café directement dans deux tasses et non pas dans la verseuse. Le répartiteur d'écoulement se présente sous la forme d'une plaque de déflexion pourvue de deux orifices ladite plaque venant actionner l'anti-goutte en position de travail pour permettre l'écoulement du café sur la plaque et à travers les deux orifices d'évacuation.

Un tel dispositif peut permettre bien évidemment à l'utilisateur de choisir librement le récipient dans lequel il souhaite récupérer le café à partir du porte-filtre. Le dispositif de l'art antérieur connu met cependant en oeuvre un montage mécanique compliqué et fragile. Il nécessite en effet de faire supporter le dispositif de répartition par des axes support fragiles et destinés à être sollicités fréquemment. Par ailleurs, le bon fonctionnement du dispositif implique un bon ajustement dimensionnel entre le dispositif de répartition d'écoulement et le moyen anti-goutte qui doit être sollicité axialement pour dégager l'orifice d'évacuation du porte-filtre. Un tel ajustement des mouvements relatifs n'est pas aisé à obtenir sur le plan industriel d'une part, et susceptible après plusieurs utilisations de se dérégler, voire de se détériorer.

L'objet de la présente invention vise en conséquence à proposer une machine à café permettant de remédier aux divers inconvénients énumérés précédemment, et susceptible de délivrer le café au choix dans une verseuse ou dans plusieurs tasses, de manière simplifiée, et à l'aide de moyens particulièrement robustes.

Un autre objet de l'invention est de fournir une machine à café permettant de sélectionner facilement et à l'aide de moyens particulièrement robustes l'un ou l'autre des modes de récupération du café.

Un objet supplémentaire de l'invention est de fournir une machine à café permettant d'assurer une répartition homogène et égale du café dans chacune des tasses disposées sous le porte-filtre.

Les objets assignés à l'invention sont atteints à l'aide d'une machine à boisson chaude, en particulier machine à café, comportant un boîtier avec un porte-filtre pourvu d'au moins une sortie de liquide, un moyen anti-goutte associé à un moyen de rappel et à un clapet de fermeture pour fermer, en position de rappel, ladite sortie de liquide, ledit moyen anti-goutte comprenant un premier moyen de commande de position du moyen anti-goutte susceptible d'être actionné automatiquement par la verseuse lorsque cette dernière est mise en place sur la machine pour dégager ladite sortie, et un second moyen de commande de position du moyen anti-goutte susceptible d'être actionné, de préférence manuellement, pour amener et maintenir ledit moyen anti-goutte en position stable de dégagement desdites sorties de liquide, caractérisée en ce que le moyen anti-gouttes comporte un plateau monté mobile à rotation sur le porte-filtre par un axe de pivotement parallèle au plan d'extension des sorties de liquide, le second moyen de commande étant constitué d'une molette ou manette, solidaire du porte-filtre, et comportant une rampe inclinée destinée à venir en appui sur une surface d'engagement du moyen anti-goutte.

D'autres détails et avantages de l'invention seront explicités dans la description et les dessins qui suivent, donnés uniquement à titre d'exemples explicatifs et non limitatifs dans lesquels :
- la figure 1 montre selon une vue générale de face, un exemple de réalisation d'une machine à café conforme à l'invention
- la figure 2 montre selon une vue latérale, un détail du porte-filtre d'une machine à café conforme à l'invention
- la figure 3 montre selon une vue de dessus, un détail de réalisation d'un moyen anti-goutte conforme à l'invention
- la figure 4 montre selon une vue de dessus, un détail de réalisation d'un porte-filtre conforme à l'invention
- la figure 5 montre selon une vue partielle en coupe, un détail de la structure d'un porte-filtre conforme à l'invention.

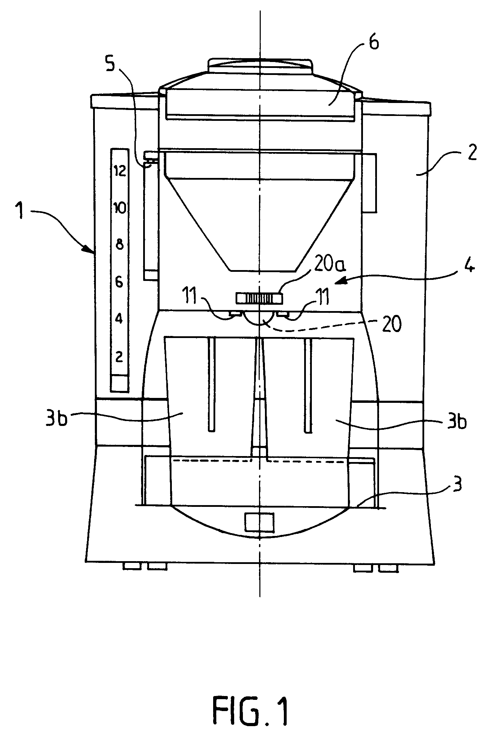

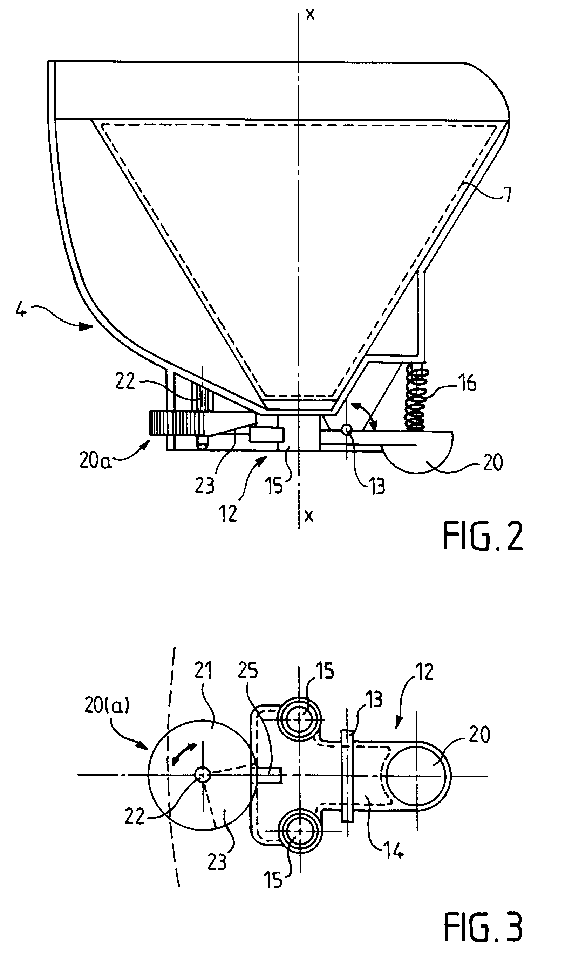

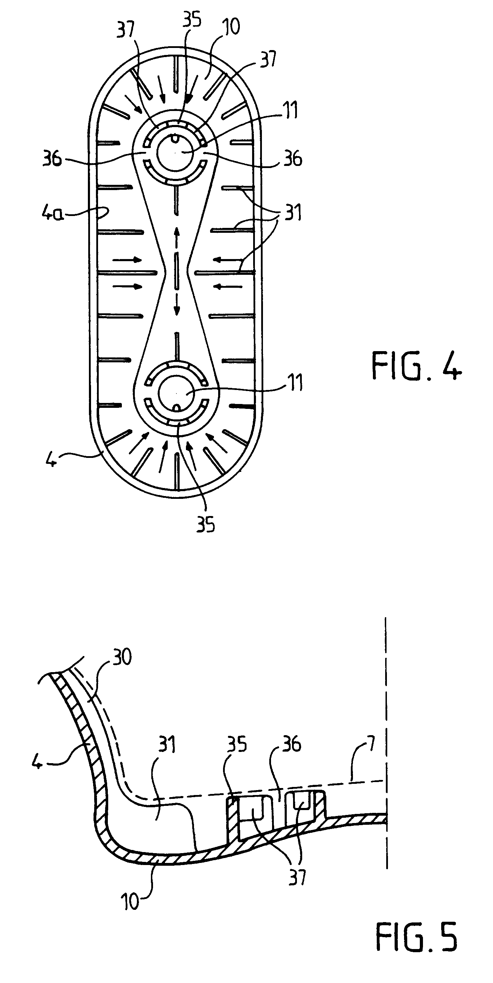

La figure 1 montre une vue générale d'une machine à café conforme à l'invention et comportant de manière connue en soi, un boîtier 1 comprenant un réservoir 2, un support 3 pour une verseuse (non représentée aux figures), des moyens de chauffe du liquide (non représentés aux figures) intégrés au moins en partie dans le support 3 pour constituer une sole chauffante. Le boîtier 1 comporte un porte-filtre 4 monté par exemple à pivotement autour d'un axe vertical 5 sur ledit boîtier et disposé en position fixe de fonctionnement sous un tube d'arrivée d'eau intégré dans une tête de distribution 6 formant la partie supérieure du boîtier 1. Le porte-filtre 4 est destiné à recevoir et supporter un filtre 7 par exemple en papier (figures 2 et 5) dans lequel repose la mouture de café.

Le porte-filtre 4 conforme à l'invention et montré en détail aux figures 2, 4 et 5, est pourvu dans son fond 10 d'au moins une et de préférence deux sorties de liquide 11, par exemple circulaires, associées à un moyen anti-goutte 12, monté mobile à pivotement sur le porte-filtre 4 par l'intermédiaire d'un axe de pivotement 13, parallèle au plan extension des sorties de liquide 11 et normal à l'axe de révolution x-x' du porte-filtre 4.

Le moyen anti-goutte 12 est constitué d'un plateau 14, par exemple en forme de T, sur lequel est monté en position fixe un clapet de fermeture 15 associé à chacune des sorties de liquide 11. Les clapets de fermeture 15 sont par exemple formés par des pions coniques en matériau élastique déformable de dimensions appropriées pour assurer la fermeture étanche des sorties de liquide 12.
Le moyen anti-goutte 12 est maintenu en position de rappel, correspondant à la position de fermeture étanche des sorties de liquide 12 par les clapets de fermeture 15, par un moyen de rappel 16 constitué par exemple d'un ressort de compression interposé entre le plateau 14 et le porte-filtre 4 (figure 2).

Le moyen anti-goutte 12 comporte de manière classique un premier moyen de commande 20 formé par un bossage situé à une extrémité du plateau 14 et formant une proéminence sur sa face inférieure. Le moyen anti-goutte 12 et le porte-filtre 4 sont disposés relativement au support de verseuse 3 de telle manière que le bossage 20 soit susceptible d'être actionné automatiquement à l'encontre du moyen de rappel 16 par la verseuse lorsque cette dernière est mise en place sur la machine. De cette façon, l'introduction de la verseuse sur le support de verseuse 3 commande par action sur le bossage 20, le pivotement autour de l'axe 13 du plateau 14 à l'encontre du moyen de rappel 16, ce qui permet de dégager la sortie de liquide 11 et d'assurer l'écoulement du café dans la verseuse. Avantageusement, le ressort de compression est interposé au droit du bossage 20.

Le moyen anti-goutte 12 est associé à un second moyen de commande 20a de la position du moyen anti-goutte, ledit second moyen étant susceptible d'être actionné, de préférence manuellement, pour amener et maintenir le moyen anti-goutte 12 en position stable de dégagement des sorties des liquides 11 indépendamment du premier moyen de commande 20a. Le second moyen de commande 20a est par exemple constitué d'une molette 21 en forme de disque, montée mobile en rotation sur le porte-filtre 4 autour d'un axe 22 de direction parallèle à l'axe x-x'. La molette 21 comporte sur un secteur de sa face inférieure une rampe inclinée 23 destinée à engager une surface du moyen anti-goutte 12 et par exemple la face supérieure du plateau 14 située à l'extrémité opposée du bossage 20. Avantageusement, la surface d'engagement peut être constituée d'une zone 25 formant surélévation à l'extrémité du plateau 14. Par rotation de la molette 21 autour de l'axe 22, il est ainsi possible de régler manuellement et progressivement l'ouverture ou la fermeture du moyen anti-goutte 12 pour l'amener en position stable de dégagement des sorties de liquide 11. Le mouvement du moyen anti-goutte 12 s'effectue par pivotement du plateau 14 autour de l'axe 13, le pivotement étant commandé par la rotation de la molette 21 et l'action de la rampe inclinée 23 sur la surface d'engagement 25.

Bien, évidemment il est possible, à titre de variante, de remplacer la molette 21 par tout moyen de commande manuelle de position équivalent, et par exemple par une manette.

Les sorties de liquide 11 sont ménagées à travers le fond 10 à une distance respective les unes des autres suffisante pour permettre à l'utilisateur de disposer au droit desdites sorties des tasses à café 3b.

La machine à café conforme à l'invention comprend un porte-filtre 4 équipé, tel que cela est montré aux figures 4 et 5, d'un système d'homogénéisation de la répartition de l'écoulement du café à travers chacune des sorties de liquide 11. Il s'avère en effet nécessaire de maîtriser parfaitement l'écoulement à travers chacune des sorties de liquide 11 afin d'obtenir une quantité de liquide équivalente dans chacune des tasses disposées au droit de chacune desdites sorties de liquide. A cet effet, il est prévu des moyens de positionnement 30 du filtre 7 comprenant une série de nervures espacées entre elles de préférence régulièrement sur toute la périphérie du porte-filtre 4. Les nervures s'étendent radialement à partir de la paroi interne 4a du porte-filtre 4 et se prolongent jusqu'au fond 10 de manière à former sur ledit fond une série de cloisons radiales 31. Ces dernières présentent sur le fond 10 une longueur constante ou variable tel que cela est montré à la figure 4, la longueur maximale correspondant à la zone médiane située entre les deux sorties de liquide 11.

Le système d'homogénéisation de la répartition de l'écoulement comporte également des moyens de régulation du débit de café constitués de parois 35 s'élevant à partir du fond 10 et entourant à distance chacune des sorties de liquide 11. Avantageusement, les parois 35 sont circulaires et en forme de demi-cercles de manière à délimiter entre elles deux ouvertures 36 diamétralement opposées. Les parois 35 comportent une série de créneaux 37 répartis de préférence régulièrement autour des sorties de liquide 11. Avantageusement, la hauteur totale des parois 35 est de l'ordre de 3 mm à 3,5 mm, la hauteur des créneaux 37 étant de l'ordre de 2 mm.

Le système d'homogénéisation de la répartition de l'écoulement permet ainsi à l'utilisateur de positionner le filtre 7 à un emplacement préétabli sans que cette position influence l'écoulement et la répartition du café dans chacune des sorties de liquide 11. En effet, les nervures 31 assurent une fonction de support du filtre 7 et le maintiennent ainsi à une distance sensiblement constante du fond 10. Par ailleurs, la présence des cloisons 35 évite un écoulement hétérogène du café en permettant au niveau de boisson de monter relativement au fond 10 et pendant cette étape d'élévation du niveau de café de s'écouler régulièrement et à faible débit à travers les ouvertures 36. Lorsque le niveau de café a atteint la partie inférieure des créneaux 37, le débit d'écoulement devient alors plus important contribuant à une meilleure régulation dans le temps de l'homogénéité de l'écoulement.

Le fonctionnement du dispositif conforme à l'invention est le suivant.

Lorsque l'utilisateur souhaite obtenir du café dans une verseuse, il procède de manière classique en disposant la verseuse sur la sole chauffante. Au cours de cette opération, la partie supérieure de la verseuse vient en contact avec le bossage 20, ce qui a pour effet, d'assurer le pivotement du moyen anti-goutte 12 et de dégager les clapets de fermeture 15 pour libérer les sorties de liquide 11. Le café peut alors s'écouler directement dans la verseuse par l'intermédiaire des sorties de liquide 11.

Lorsque l'utilisateur désire récupérer le café chaud directement dans au moins une et de préférence deux tasses à café, il met en place chaque tasse au droit d'une sortie de liquide 11. Avantageusement, les tasses peuvent être disposées au plus près des sorties des liquides 11 par l'intermédiaire d'un dispositif réhausseur s'adaptant sur la sole tel que montré à la figure 1 par exemple. L'utilisateur actionne ensuite par exemple manuellement la mollette 21 afin d'assurer le pivotement du moyen anti-goutte autour de l'axe 13 en vue de permettre la libération des sorties de liquide 11. Le café peut alors s'écouler à travers chacune des sorties de liquide 11 directement dans les tasses situées sous lesdites sorties.

A titre de variante, il est possible de prévoir plus de deux sorties de liquide 11, et par exemple trois et même quatre.

## Revendications

1. Machine à boisson chaude, en particulier machine à café, comportant un boîtier (1) avec un porte-filtre (4) pourvu d'au moins une sortie de liquide (11), un moyen anti-goutte (12) associé à un moyen de rappel (16) et à un clapet de fermeture (15) pour fermer, en position de rappel, ladite sortie de liquide (11), ledit moyen anti-goutte (12) comprenant un premier moyen de commande de position (20) du moyen anti-goutte (12) susceptible d'être actionné automatiquement par la verseuse lorsque cette dernière est mise en place sur la machine pour dégager ladite sortie (11), et un second moyen de commande de position (20a) du moyen anti-goutte (12) susceptible d'être actionné, de préférence manuellement, pour amener et maintenir ledit moyen anti-goutte (12) en position stable de dégagement desdites sorties de liquide (11),
caractérisée en ce que le moyen anti-gouttes (12) comporte un plateau (14) monté mobile à rotation sur le porte-filtre (4) par un axe de pivotement (13) parallèle au plan d'extension des sorties de liquide (11), le second moyen de commande (20a) étant constitué d'une molette (21) ou manette, solidaire du porte-filtre (4), et comportant une rampe inclinée (23) destinée à venir en appui sur une surface d'engagement du moyen anti-goutte (12).

2. Machine selon la revendication 1 caractérisée en ce que
- le porte-filtre (4) est pourvu d'au moins deux sorties de liquide (11) disposées de manière à permettre l'écoulement simultané du café dans des tasses associées à chaque sortie de liquide (11)
- le moyen anti-goutte (12) comporte un clapet de fermeture (15) pour chacune des sorties de liquide (11).

3. Machine selon l'une des revendications 1 à 2 caractérisée en ce que le plateau (14) comporte à une extrémité un bossage (20) formant le premier moyen de commande, et à l'autre extrêmité la surface d'engagement pour le second moyen de commande (20a) ainsi que les clapets de fermeture (15).

4. Machine selon l'une des revendications 1 à 3 caractérisée en ce que les clapets de fermeture (15) sont formés par des pions en matériau élastique déformable.

5. Machine selon l'une des revendications 1 à 4 caractérisée en ce que le moyen anti-goutte (12) est maintenu en position de rappel par un moyen de rappel (16), incluant un ressort de compression.

6. Machine selon la revendication 5 caractérisée en ce que le moyen de rappel (16) est interposé entre le plateau (14) et le porte-filtre (4) au droit du bossage (20).

7. Machine selon l'une des revendications 1 à 6 caractérisée en ce que le porte-filtre (4) comporte un système de répartition de l'écoulement du café par chacune des sorties de liquide (11) incluant des moyens de positionnement (30) du filtre et des moyens de régulation du débit de café à travers les sorties de liquide (11).

8. Machine selon la revendication 7 caractérisée en ce que les moyens de positionnement (30) comprennent une série de nervures espacées entre elles et s'étendant radialement à partir de la paroi interne (4a) et du fond (10) du porte-filtre (4), lesdites nervures (30) s'étendant sur ledit fond (10) de manière à supporter le filtre (7) et le maintenir à distance dudit fond (10).

9. Machine selon la revendication 7 ou 8 caractérisée en ce que chaque sortie de liquide (11) est ménagée dans l'épaisseur du fond (10) du porte-filtre et est entourée par les moyens de régulation du débit constitués de parois (35) munies d'ouvertures (36) et de créneaux (37) ménagés à partir du bord supérieur des parois (35).

10. Machine selon la revendication 9 caractérisée en ce que les sorties de liquide (11) et les parois (35) sont circulaires et les ouvertures (36) sont de préférence au nombre de deux, diamétralement oposées et s'étendent sur toute la hauteur des parois à partir du fond (10).

## Claims

1. A hot-drinks machine, in particular a coffee machine, including a housing (1) with a filter holder (4) provided with at least one fluid outlet (11), and anti-drip means (12) associated with return means (16) and with a closure valve (15) for closing said fluid outlet (11) in the return position, said anti-drip means (12) comprising first position-control means (20) for controlling the position of the anti-drip means (12), and capable of being actuated automatically by the coffeepot in order to disengage said outlet (11) when said coffeepot is placed on the machine, and second position-control means (20a) for controlling the position of the anti-drip means (12), and capable of being actuated, preferably manually, in order to bring said anti-drip means (12) into a stable position in which it disengages said fluid outlets (11), and to hold it there,
the machine being characterized in that the anti-drip means (12) comprises a tray (14) which is movably mounted on the filter holder (4) to pivot about a pivot axis (13) which is parallel to the plane in which the fluid outlets (11) extend, the second control means (20a) being constituted by a wheel (21) or lever secured to the filter holder (4), and including an inclined ramp (23) designed to bear against an engagement surface of the anti-drip means (12).

2. A machine according to claim 1, characterized in that:
• the filter holder (4) is provided with at least two fluid outlets (11) which are disposed so as to allow coffee to flow simultaneously into respective cups associated with each fluid outlet (11); and
• the anti-drip means (12) includes a closure valve (15) for each of the fluid outlets (11).

3. A machine according to claim 1 or 2, characterized in that the tray (14) includes, at one end, a bulge (20) forming the first control means, and at its other end, the engagement surface for the second control means (20a), and also the closure valves (15).

4. A machine according to any one of claims 1 to 3, characterized in that the closure valves (15) are formed by plugs made of resiliently deformable material.

5. A machine according to any one of claims 1 to 4, characterized in that the anti-drip means (12) is held in the return position by return means (16) including a compression spring.

6. A machine according to claim 5, characterized in that the return means (16) is interposed between the tray (14) and the filter holder (4) vertically above the bulge (20).

7. A machine according to any one of claims 1 to 6, characterized in that the filter holder (4) includes a distribution system for distributing the flow of coffee via each of the fluid outlets (11), said filter holder including positioning means (30) for positioning the filter, and control means for controlling the flow of coffee through the fluid outlets (11).

8. A machine according to claim 7, characterized in that the positioning means (30) include a series of spaced-apart ribs which extend radially from the inside wall (4a) and which stand on the bottom (10) of the filter holder (4), said ribs (30) extending over said bottom (10) so as to support the filter (7) and hold it at a distance from said bottom (10).

9. A machine according to claim 7 or 8, characterized in that each fluid outlet (11) is formed in the thickness of the bottom (10) of the filter holder and is surrounded by flow-control means constituted by walls (35) provided with openings (36) and notches (37) opening out on the top edge of the walls (35).

10. A machine according to claim 9, characterized in that the fluid outlets (11) and the walls (35) are circular, and the openings (36) are preferably two in number, are diametrically opposite, and extend from the bottom (10) over the entire height of the walls.

## Patentansprüche

1. Maschine für Heißgetränke, insbesondere Kaffeemaschine, mit einem Gehäuse (1), das einen Filterträger (4) enthält, der mit wenigstens einem Flüssigkeitsausgang (11) und einem Antitropfmittel (12) versehen ist, dem ein Rückstellmittel (16) und ein Verschlußelement (15) Zugeordnet ist, um in der Ruhestellung den Flüssigkeitsausgang (11) zu verschließen, wobei das Antitropfmittel (12) ein erstes Mittel (20) zur Steuerung der Stellung des Antitropfmittels (12) enthält, das automatisch von der Kaffeekanne betätigt werden kann, wenn diese an der Maschine abgestellt wird, um den Ausgang (11) freizugeben, und ein zweites Mittel (20a) zur Steuerung der Stellung des Antitropfmittels (12), das vorzugsweise manuell betätigt werden kann, um das Antitropfmittel (12) in eine stabile Stellung des Freigebens der Flüssigkeitsausgänge (11) zu bringen und dort zu halten,
dadurch gekennzeichnet, daß das Antitropfmittel (12) eine Platte (14) enthält, die an dem Filterträger (4) drehbeweglich mittels einer Schwenkachse (13) angebracht ist, die parallel zur Erstreckungsebene der Flüssigkeitsausgänge (11) ist, wobei das zweite Steuermittel (20a) durch ein fest mit dem Filterträger (4) verbundenes Rad (21) oder einen Hebel gebildet ist, das bzw. der eine geneigte Rampe (23) enthält, die dafür vorgesehen ist, an einer Angriffsfläche des Antitropfmittels (12) anzuliegen.

2. Maschine nach Anspruch 1, dadurch gekennzeichnet, daß
- der Filterträger (4) mit wenigstens zwei Flüssigkeitsausgängen (11) versehen ist, die so angeordnet sind, daß sie das gleichzeitige Ablaufen von Kaffee in jedem Flüssigkeitsausgang (11) zugeordnete Tassen ermöglichen,
- das Antitropfmittel (12) ein Verschlußelement (15) für jeden der Flüssigkeitsausgänge (11) enthält.

3. Maschine nach einem der Ansprüche 1 bis 2, dadurch gekennzeichnet, daß die Platte (14) an einem Ende einen Vorsprung (20) enthält, der das erste Steuermittel bildet, und am anderen Ende die Angriffsfläche für das zweite Steuermittel (20a) sowie die Verschlußelemente (15).

4. Maschine nach einem der Ansprüche 1 bis 3, dadurch gekennzeichnet, daß die Verschlußelemente (15) durch Stücke aus elastischem, verformbarem Marterial gebildet sind.

5. Maschine nach einem der Ansprüche 1 bis 4, dadurch gekennzeichnet, daß das Antitropfmittel (12) in der zurückgestellten Stellung durch ein Rückstellmittel (16) gehalten wird, das eine Druckfeder enthält.

6. Maschine nach Anspruch 5, dadurch gekennzeichnet, daß das Rückstellmittel (16) zwischen der Platte (14) und dem Filterträger (4) senkrecht zum Vorsprung (20) angeordnet ist.

7. Maschine nach einem der Ansprüche 1 bis 6, dadurch gekennzeichnet, daß der Filterträger (4) ein System zum Verteilen des Ablaufens des Kaffees durch jeden der Flüssigkeitsausgänge (11) enthält, das Mittel (30) zum Positionieren des Filters sowie Mittel zum Regulieren des Kaffeedurchsatzes durch die Flüssigkeitsausgänge (11) beinhaltet.

8. Maschine nach Anspruch 7, dadurch gekennzeichnet, daß die Positionierungsmittel (30) eine Reihe von Rippen enthalten, die voneinander beabstandet sind und sich radial ausgehend von der Innenwand (4a) und dem Boden (10) des Filterträgers (4) erstrecken, wobei sich die Rippen (30) am Boden (10) so erstrecken, daß sie den Filter (7) stützen und diesen im Abstand vom Boden (10) halten.

9. Maschine nach Anspruch 7 oder Anspruch 8, dadurch gekennzeichnet, daß jeder Flüssigkeitsausgang (11) in der Dicke des Bodens (10) des Filterträgers ausgebildet und von den Mitteln zur Regulierung des Durchsatzes umgeben ist, die durch Wände (35) gebildet sind, die mit Öffnungen (36) und Kerben (37) versehen sind, die ausgehend vom oberen Rand der Wände (35) ausgebildet sind.

10. Maschine nach Anspruch 9, dadurch gekennzeichnet, daß die Flüssigkeitsausgänge (11) und die Wände (35) kreisförmig sind und die Öffnungen (36) vorzugsweise in einer Anzahl von zwei ausgebildet sind, einander diametral gegenüberliegen und sich ausgehend vom Boden (10) über die gesamte Höhe der Wände erstrecken.
